# NEUE EUROPÄISCHE PATENTSCHRIFT

(11) **EP 2 195 552 B2**
(45) Veröffentlichungstag und Bekanntmachung des Hinweises auf die Entscheidung über den Einspruch: **22.02.2017**
(45) Hinweis auf die Patenterteilung: 26.12.2012
(21) Anmeldenummer: 08801704.1
(22) Anmeldetag: 26.08.2008
(51) Int. Cl.: F16H 3/00, F16H 3/097

(54) **ZAHNRÄDERWECHSELGETRIEBE MIT ZWEI EINGANGSWELLEN UND ZWEI LASTSCHALTKUPPLUNGEN**
VARIABLE-SPEED GEAR WHEEL TRANSMISSION COMPRISING TWO INPUT SHAFTS AND TWO CLUTCHES
BOÎTE DE VITESSES À ENGRENAGES COMPORTANT DEUX ARBRES D'ENTRÉE ET DEUX EMBRAYAGES

(30) Priorität: 28.08.2007 DE 102007040449
(43) Veröffentlichungstag der Anmeldung: 16.06.2010
(73) Patentinhaber: Daimler AG, 70327 Stuttgart (DE)
(72) Erfinder: GITT, Carsten, 70376 Stuttgart (DE)
(74) Vertreter: JENSEN & SON
(86) Internationale Anmeldenummer: PCT/EP2008/006973
(87) Internationale Veröffentlichungsnummer: WO 2009/030402

(56) Entgegenhaltungen:
- EP-A1- 1 013 966
- EP-B1- 0 090 674
- EP-B1- 2 002 146
- WO-A-2005/021999
- DE-A1- 4 122 628
- DE-A1- 4 342 185
- DE-A1- 4 422 900
- DE-A1- 10 325 647
- DE-A1- 10 332 210
- DE-A1-102005 020 415
- DE-A1-102005 033 027
- DE-A1-102005 033 027
- DE-A1-102005 044 068
- G. LECHNER ET AL.: 'Automotive Transmissions', 1999, SPRINGER-VERLAG, BERLIN HEIDELBERG - NEW YORK Seiten 88-90 - 339

## Beschreibung

Die Erfindung betrifft ein Zahnräderwechselgetriebe nach dem Oberbegriff des Anspruchs 1.

Aus der WO 00/39484 ist bereits ein Zahnräderwechselgetriebe mit zwei Eingangswellen, die über zwei Lastschaltkupplungen mit einer Antriebswelle verbindbar sind, bekannt.

Die gattungsgemäße WO 2005/021999 A1 zeigt Zahnräderwechselgetriebe mit zwei Eingangswellen, zwei Lastschaltkupplungen und einer Schaltvorrichtung, die dazu vorgesehen ist, entweder eine der Zahnradebenen als eine Eingangskonstante zur Bildung zumindest eines Getriebegangs oder als ein Gangradpaar zur Bildung eines weiteren Getriebegangs zu schalten.

Der Erfindung liegt die Aufgabe zugrunde, ein Zahnräderwechselgetriebe bereitzustellen, das bei einer möglichst kompakten Bauweise eine möglichst hohe Anzahl sequentiell schaltbarer Getriebegänge bereitstellt. Die Aufgabe wird gelöst durch die Merkmale des Patentanspruchs 1, wobei weitere Ausgestaltungen der Erfindung den Unteransprüchen und den unabhängigen Patentansprüchen entnommen werden können.

Es wird ein Zahnräderwechselgetriebe mit zumindest zwei Eingangswellen, die über zumindest zwei Lastschaltkupplungen mit einer Antriebswelle verbindbar sind, mit in Zahnradebenen angeordneten Zahnrädern und mit einer Ausgangswelle, die wirkungsmäßig mit den Eingangswellen verbindbar ist, sowie mit zumindest zwei sequentiell schaltbaren Vorwärtsgetriebegängen und einer Schaltvorrichtung, die dazu vorgesehen ist, eine der Zahnradebenen als eine Eingangskonstante zur Bildung zumindest eines Getriebegangs und als ein Gangradpaar zur Bildung eines weiteren Getriebegangs zu schalten, vorgeschlagen, wobei die Schaltvorrichtung eine Schalteinheit , die dazu vorgesehen ist, eine der Eingangswellen wahlweise drehfest mit einem von zwei Losrädern zu verbinden, und eine weitere Schalteinheit, die dazu vorgesehen ist, eines der beiden Losräder drehfest mit der Ausgangswelle zu verbinden, umfasst.

Unter einer "Eingangswelle" soll insbesondere eine Welle verstanden werden, über die ein Antriebsmoment in das Zahnräderwechselgetriebe eingeleitet wird. Unter einer "Eingangskonstante" soll insbesondere eine in einer Kraftflussrichtung des Antriebsmoments zuerst im Kraftfluss angeordnete Zahnradebene mit zumindest zwei Zahnrädern, über die das Antriebsmoment geleitet wird, verstanden werden. Unter einem "Gangradpaar" soll insbesondere eine in Kraftflussrichtung auf die Eingangskonstante nachfolgende Zahnradebene mit zumindest zwei Zahnrädern verstanden werden.

Unter "drehfest" soll dabei insbesondere verstanden werden, dass zumindest eine Drehrichtung und eine Drehzahl der drehfest verbundenen Teile gleich ist.

Dadurch kann eine weitere Eingangskonstante bei gleich bleibender Anzahl der Eingangswellen einfach realisiert werden, wodurch sich eine Anzahl der bildbaren Getriebegänge erhöht.

Durch eine erfindungsgemäße Ausgestaltung kann mit einer relativ geringen Anzahl von Zahnradebenen eine hohe Gangzahl realisiert werden, wodurch sich ein Zahnräderwechselgetriebe bereitstellen lässt, das bei einer möglichst kompakten Bauweise eine möglichst hohe Anzahl sequentiell schaltbarer Getriebegänge bereitstellt.

Außerdem wird vorgeschlagen, dass eines der Losräder gegenüber einer der Eingangswellen gleitgelagert ist. Durch eine solche Ausführung kann die entsprechende Zahnradebene, die insbesondere als eine Eingangskonstante dient, von der Eingangswelle entkoppelt werden und eine weitere Zahnradebene kann als Eingangskonstante zur Bildung eines Getriebegangs geschaltet werden. Eine Lagerung auf der inneren Eingangswelle ist dabei besonders vorteilhaft.

Ferner ist es vorteilhaft, wenn eines der Losräder auf der Ausgangswelle angeordnet ist, da dadurch eine einfache Lagerung des Losrads erreichbar ist.

Vorteilhafterweise ist die Zahnradebene als ein Gangradpaar zur Bildung von zwei der Vorwärtsgetriebegänge und als Eingangskonstante zur Bildung von zwei weiteren Vorwärtsgetriebegängen vorgesehen. Durch eine Nutzung der Zahnradebene für mehrere Getriebegänge mit einer geringen Anzahl von Zahnradebenen kann eine hohe Anzahl von Getriebegängen realisiert werden, und ein Bauraum des Zahnräderwechselgetriebes kann ebenfalls kompakt gestaltet werden.

Weiter ist es vorteilhaft, wenn eine weitere Zahnradebene als ein Gangradpaar zur Bildung von drei der Vorwärtsgetriebegänge vorgesehen ist, was ebenfalls für eine Anzahl der Zahnradebenen vorteilhaft ist.

Ferner wird vorgeschlagen, dass eine weitere Zahnradebene als ein Gangradpaar zur Bildung von zwei der Vorwärtsgetriebegänge vorgesehen ist. Insbesondere wenn auch noch eine dritte Zahnradebene eine Mehrfachnutzung als ein Gangradpaar aufweist, kann ein erfindungsgemäßes Zahnräderwechselgetriebe besonders kompakt realisiert werden.

Weiter wird vorgeschlagen, dass zur Bildung eines Vorwärtsgetriebegangs, der als ein Direktgang ausgelegt ist, ein Losrad der ersten Zahnradebene mit einer der Eingangswellen und mit der Ausgangswelle drehfest verbindbar ist. Dadurch kann eine drehfeste Verbindung der Antriebswelle mit der Ausgangswelle realisiert werden und ein Direktgang kann einfach gebildet werden.

Es wird vorgeschlagen, dass das Zahnräderwechselgetriebe genau sieben Zahnradebenen und genau vier Schalteinheiten umfasst. Ein solches Zahnräderwechseigetriebe kann eine kleine Anzahl von Zahnradebenen bei einer großen Anzahl realisierbarer Getriebegänge aufweisen.

Ferner wird vorgeschlagen, dass zumindest eine Schalteinheit eine beidseitig schaltbare Schaltmuffe aufweist, die dazu vorgesehen ist, die Schalteinheit mit zwei zu der Schalteinheit drehbaren Einheiten drehfest zu verbinden. Eine derartige Schalteinheit ist besonders kompakt. Vorteilhafterweise ist die Schalteinheit drehfest auf einer Welle angeordnet und die Einheiten sind durch Losräder oder weitere Wellen gebildet. Insbesondere ist es vorteilhaft, wenn sämtliche Schalteinheiten derart ausgestaltet sind.

Es wird vorgeschlagen, dass das Zahnräderwechselgetriebe neun Vorwärtsgetriebegänge umfasst, die durchgehend sequentiell lastschaltbar sind, wodurch ein hoher Schaltkomfort und damit ein hoher Kundennutzen erreicht wird.

Zusätzlich wird vorgeschlagen, dass das Zahnräderwechselgetriebe drei Rückwärtsgetriebegänge umfasst, die durchgehend sequentiell lastschaltbar sind, wodurch der Kundennutzen weiter erhöht wird.

Weiter wird vorgeschlagen, dass zumindest zwei Stufensprünge unterschiedlich groß ausgebildet sind. Unter einem "Stufensprung" soll insbesondere das Verhältnis einer Getriebeübersetzung eines Getriebegangs zu einer Getriebeübersetzung eines nächsthöheren Getriebegangs verstanden werden. Unter "unterschiedlich groß" soll ein Unterschied zwischen den Stufensprüngen von mehr als 5% verstanden werden. Durch unterschiedlich groß ausgebildete Stufensprünge kann eine Getriebeabstufung realisiert werden, die insbesondere für Personenkraftwagen vorteilhaft ist.

Außerdem wird vorgeschlagen, dass sämtliche Stufensprünge dem Betrag nach kleiner sind als ein Stufensprung zwischen dem zweiten und dritten Vorwärtsgetriebegang. Dadurch kann eine Anfahrstrategie realisiert werden, bei der ein erster Getriebegang als ein stark untersetzter Getriebegang verwendet wird. Damit können ein erster, ein zweiter und ein dritter Gang zum Anfahren verwendet werden.

Als alternative Gangabstufung wird vorgeschlagen, dass sämtliche Stufensprünge zwischen je zwei benachbarten Vorwärtsgetriebegängen annähernd gleich bleibend ausgebildet sind. Unter "annähernd gleich" soll ein Unterschied zwischen den Stufensprüngen von maximal 5% verstanden werden. Eine Gangabstufung mit derart ausgestalteten Stufensprüngen, ist insbesondere für Nutzfahrzeuge vorteilhaft.

Ferner wird vorgeschlagen, dass ein Ende einer der Eingangswellen, das dazu vorgesehen ist, ein Pilotlager aufzunehmen und/oder das der Ausgangswelle zugewandt ist, als eine Hohlwelle ausgeführt ist. Unter einem "Pilotlager" soll insbesondere ein Lager verstanden werden, das eine der Eingangswellen, insbesondere die innere Eingangswelle, und die Ausgangswelle drehbar verbindet. Durch eine weit eingangsseitige Lagerung der beiden Wellen kann eine besonders stabile Lagerung erreicht werden. Als ein Pilotlager ist insbesondere ein Wälzlager vorteilhaft, es sind aber auch andere, dem Fachmann als sinnvoll erscheinende Lagerungseinheiten denkbar. Dadurch lässt sich eine einfache Lagerung zwischen einer der Eingangswellen und der Ausgangswelle realisieren. Vorteilhafterweise ist insbesondere ein Ende der inneren Eingangswelle als eine Hohlwelle ausgeführt. Alternativ kann auch ein Ende der Ausgangswelle, welches den Eingangswellen zugewandt ist, als eine Hohlwelle ausgeformt werden.

Weiter wird vorgeschlagen, dass das Pilotlager eingangsseitig der zweiten Zahnradebene angeordnet ist. Unter "eingangsseitig" soll insbesondere auf der Seite in Richtung der Schaltkupplungsvorrichtungen bzw. in Richtung des Getriebeeingangs verstanden werden. Dadurch kann ein derartiges weit eingangsseitig angeordnetes Pilotlager und damit eine stabile Lagerung einfach realisiert werden. Insbesondere vorteilhaft ist dabei, wenn das Pilotlager eingangsseitig der ersten Eingangskonstante liegt.

Außerdem wird vorgeschlagen, dass die Eingangswelle und die Ausgangswelle durch ein Zusatzlager gegeneinander gelagert sind. Durch ein Zusatzlager neben dem Pilotlager kann eine besonders stabile Lagerung realisiert werden.

Ferner wird vorgeschlagen, dass das Zahnräderwechselgetriebe eine Lagerungseinheit mit zumindest zwei Lagerebenen umfasst, die dazu vorgesehen ist, die Eingangswellen und/oder die Ausgangswelle zu lagern. Durch eine Lagerungseinheit mit zwei Ebenen kann eine Lagerung der Wellen in dem Zahnräderwechselgetriebe einfach realisiert werden. Insbesondere ist es vorteilhaft, wenn auch die Vorgelegewellen durch die Lagerungseinheit gelagert werden. Grundsätzlich ist eine Lagerung aller, dem Fachmann als sinnvoll erscheinenden Teile mittels der Lagerungseinheit möglich.

Vorteilhaft ist insbesondere eine Lagerungseinheit, die drei Lagerebenen umfasst. Insbesondere mit drei Lagerebenen kann eine kompakte und stabile Lagerung der Zahnradebenen erreicht werden.

Dabei wird vorgeschlagen, dass zumindest eine der Lagerebenen eine Lagerwand umfasst, die mit einem Getriebegehäuse fest verbunden ist. Eine Lagerwand ist als eine Lagerebene besonders stabil. Besteht das Getriebegehäuse aus mehreren Teilen, wird vorgeschlagen, dass die Lagerwand mit zumindest einem Getriebegehäuseteil fest verbunden ist.

Weiter wird ein nicht beanspruchtes Verfahren für ein Zahnräderwechselgetriebe vorgeschlagen, bei dem durch eine Steuereinheit eine Schaltlogik in Abhängigkeit von zu erwartenden Schaltvorgängen von Schalteinheiten angepasst wird, indem in zumindest einem Betriebsmodus Schaltelementbetätigungen von einem gekoppelten Zustand in eine Neutralstellung und beim nächsten Schaltvorgang zurück in den gekoppelten Zustand vermieden werden, wodurch eine Anzahl von Schaltelementbetätigungen reduziert werden kann, indem Schaltelementbetätigungen von Schalteinheiten, die lediglich zu einer rotatorischen Entkopplung führen, unterlassen werden. Dadurch kann insbesondere ein Verschleiß der Schalteinheiten reduziert und eine Lebensdauer des Zahnräderwechselgetriebes erhöht werden.

Weiter wird ein nicht beanspruchtes Verfahren vorgeschlagen, bei dem in zumindest einem Anfahrmodus in einer primären Anfahrphase zumindest zwei Vorwärtsgetriebegänge eingelegt sind und bei dem die zugehörigen Lastschaltkupplungen schlupfend betrieben werden, so dass beide Lastschaltkupplungen und somit beide Vorwärtsgetriebegänge an der Übertragung des Antriebsdrehmoments beteiligt sind. Dadurch kann ein ungleicher Verschleiß der Lastschaltkupplungen vermieden werden. Insbesondere ist es vorteilhaft, wenn ein erster und ein zweiter Getriebegang eingelegt sind und die zugehörigen Lastschaltkupplungen schlupfend betrieben werden, da dadurch der Verschleiß der Kupplungsvorrichtungen minimiert werden kann, es ist aber auch denkbar, dass ein zweiter und ein dritter Getriebegang eingelegt sind und die zugehörigen Lastschaltkupplungen schlupfend betrieben werden, wodurch eine Anzahl von Schaltvorgängen reduziert werden kann.

Weiter ist es vorteilhaft, wenn im Anschluss an die primäre Anfahrphase eine der beiden Lastschaltkupplungen sukzessive geöffnet und die andere Lastschaltkupplung sukzessive geschlossen wird, so dass nur noch eine der Lastschaltkupplungen und somit nur noch einer der Vorwärtsgetriebegänge an der Übertragung des Antriebsdrehmoments beteiligt ist. Dadurch wird ein langer schlupfender Betrieb, der zu einem hohen Verschleiß der Lastschaltkupplungen führt, vermieden, wodurch ein Wechselintervall für die Lastschaltkupplungen verlängert werden kann.

Ferner wird vorgeschlagen, dass dabei eine Entscheidung, welche der beiden Lastschaltkupplungen im Anschluss an die primäre Anfahrphase sukzessive geöffnet und welche der beiden Lastschaltkupplungen im Anschluss an die primäre Anfahrphase sukzessive geschlossen wird, von einer Steuer- und/oder Regeleinheit in Abhängigkeit von mindestens einer Kenngröße getroffen und/oder umgesetzt wird. Eine Kenngröße kann dabei insbesondere von einer Ladezustandskenngröße und/oder einer Fahrbahnsteigungskenngröße und/oder einer Antriebsdrehmomentbedarfskenngröße gebildet sein. Durch ein solches Verfahren mittels einer entsprechend ausgestalteten Regel- und/oder Steuereinheit kann ein erhöhter Kundennutzen erreicht werden.

Außerdem wird vorgeschlagen, dass in zumindest einem Anfahrmodus in einer primären Anfahrphase ein erster oder ein zweiter Vorwärtsgetriebegang geschaltet wird, indem die zugehörige Lastschaltkupplung schlupfend betrieben wird, während die andere Lastschaltkupplung geöffnet ist. Ein solcher Anfahrmodus ist ebenfalls vorteilhaft für den Kundennutzen. Insbesondere in Fahrsituationen, in denen das Fahrzeug feinfühlig rangiert werden soll oder in denen häufige, direkt aufeinander folgende Anfahrvorgänge erfolgen, kann dadurch ein vorteilhaftes Schaltverhalten erreicht werden.

Weitere Vorteile ergeben sich aus der folgenden Zeichnungsbeschreibung. In den Zeichnungen ist ein Ausführungsbeispiel der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Dabei zeigen:
- Fig. 1: einen schematischen Aufbau eines erfindungsgemäßen Zahnräderwechselgetriebes,
- Fig. 2: eine Gangabstufung mit annähernd gleichen Stufensprüngen,
- Fig. 3: eine Gangabstufung mit unterschiedlich großen Stufensprüngen,
- Fig. 4: Zahlenwerte für die Gangabstufung aus Figur 3,
- Fig. 5: eine Schaltlogik für das erfindungsgemäße Zahnräderwechselgetriebe,
- Fig. 6: eine angepasste Schaltlogik für einen Beschleunigungsmodus und
- Fig. 7: ein Lagerungskonzept für das erfindungsgemäße Zahnräderwechselgetriebe.

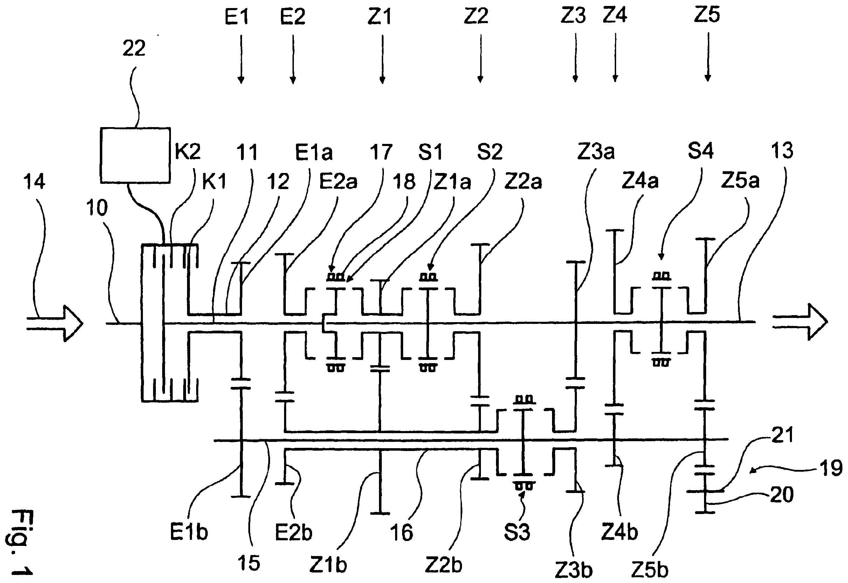

Figur 1 zeigt schematisch einen Aufbau eines erfindungsgemäßen Zahnräderwechselgetriebes mit zumindest zwei Eingangswellen 11, 12, die über zumindest zwei Lastschaltkupplungen K1, K2 mit einer Antriebswelle 10 verbindbar sind, mit in Zahnradebenen E1, E2, Z1-Z5 angeordneten Zahnrädern und mit einer Ausgangswelle 13, die wirkungsmäßig mit den Eingangswellen 11, 12 verbindbar ist. Zur Vereinfachung ist ein Lagerungskonzept des Zahnräderwechselgetriebes hier nicht näher dargestellt.

Eine der Eingangswellen 11, die als eine Vollwelle ausgebildet ist, ist zur Einleitung eines Antriebsmoments 14 mit einem Teil der zweiten Lastschaltkupplung K2 verbunden. Die zweite Eingangswelle 12, die als eine Hohlwelle ausgeführt ist, ist zur Einleitung eines Antriebsmoments 14 drehfest mit einem Teil der ersten Lastschaltkupplung K1 verbunden.

Die beiden Eingangswellen 11, 12 sind koaxial zueinander ausgeführt, wobei die innere als Vollwelle ausgeführte Eingangswelle 11 die äußere als Hohlwelle ausgeführte Eingangswelle 12 durchsetzt und auf dieser gelagert ist. Die Ausgangswelle 13 ist koaxial zur Antriebswelle 10 bzw. zu den Eingangswellen 11, 12 angeordnet und mit einem Ende mittels eines Pilotlagers 23 drehbar an einem Ende der inneren Eingangswelle 11 gelagert.

Zur Bildung von Getriebegängen V1-V9, R1-R3 sind die Zahnräder, die teilweise als Losräder E2a, Z1a, Z2a, Z3b, Z4a und Z5a und teilweise als Festräder E1a, E1b, E2b, Z1b, Z2b, Z3a, Z4b, Z5b, 20 ausgeführt sind, in Zahnradebenen E1, E2, Z1-Z5 angeordnet. Die Zahnradebenen E1, E2, Z1-Z5 dienen teilweise als Eingangskonstanten, die dazu vorgesehen sind, die Eingangswellen 11, 12 mit Vorgelegewellen 15, 16 zu verbinden, und teilweise als Gangradpaare, die dazu vorgesehen sind, die Vorgelegewellen 15, 16 mit der Ausgangswelle 13 zu verbinden. Die Zahnradebenen E1, E2, Z1, die als Eingangskonstanten dienen, sind die in einer Kraftflussrichtung des Antriebsmoments 14 bei der Schaltung eines Getriebegangs zuerst angeordneten Zahnradebenen. Die Zahnradebenen E1, E2, Z1 und die Zahnradebenen Z1-Z5, die als die Gangradpaare dienen, sind die nachfolgenden Zahnradebenen Z1-Z5.

Eine der Vorgelegewellen 15 ist als eine Vollwelle ausgeführt, die andere Vorgelegewelle 16 als eine Hohlwelle. Die äußere als Hohlwelle ausgeführte Vorgelegewelle 15 und die innere als Vollwelle ausgeführte Vorgelegewelle 16 sind koaxial zueinander angeordnet, wobei die innere Vorgelegewelle 15 die äußere Vorgelegewelle 16 durchsetzt und auf dieser gelagert ist. Die Vorgelegewellen 15, 16 sind parallel zu den Eingangswellen 11, 12 bzw. der Ausgangswelle 13 angeordnet.

Die erste Zahnradebene E1 umfasst ein Festrad E1a, das auf der äußeren Eingangswelle 12 angeordnet ist, sowie ein Festrad E1 b, das auf der inneren Vorgelegewelle 15 angeordnet ist und mit dem Festrad E1a kämmt. Über die erste Zahnradebene E1, die eine erste Eingangskonstante für einen Teil der Getriebegänge V2, V4, V6, V8, R2 bildet, ist die äußere Eingangswelle 11 wirkungsmäßig mit der inneren Vorgelegewelle 15 verbunden.

Die zweite Zahnradebene E2 umfasst das Losrad E2a, das gegen die innere Eingangswelle 11 gelagert, z.B. gleitgelagert ist und über die Schalteinheit S1 mit der inneren Eingangswelle 11 verbunden werden kann. Das Losrad E2a kämmt mit dem Festrad E2b, das auf der äußeren Vorgelegewelle 16 angeordnet ist. Die zweite Zahnradebene E2 bildet eine zweite Eingangskonstante für weitere Getriebegänge V5, V9, R3.

Die Schalteinheit S1, und analog die Schalteinheiten S2, S3, S4, umfasst eine beidseitig schaltbare Schaltmuffe 18, die drehfest mit der inneren Eingangswelle 11 verbunden ist. Die Schaltmuffe 18 ist axial verschiebbar angeordnet. Die Schaltmuffe 18 weist eine Neutralstellung N auf, in der sie ungekoppelt ist, und zwei seitliche Schiebestellungen 1, 2, in denen sie wahlweise drehfest mit einem von zwei nicht näher dargestellten Kupplungskörpern verbunden ist, wodurch die Schaltmuffe 18 und damit die innere Eingangswelle 11 wahlweise mit einem von zwei Losrädern E2a, Z1 a verbunden werden kann. Die restlichen Schalteinheiten S2, S3, S4 sind analog zur Schalteinheit S1 aufgebaut, weshalb bezüglich der Funktionsweise der Schalteinheiten S3, S4, S5 auf die Beschreibung der Schalteinheit S1 verwiesen werden kann.

Die dritte Zahnradebene Z1 umfasst das Losrad Z1a, das auf der Ausgangswelle 13 angeordnet ist. Über die Schalteinheit S1, die das Losrad E2a drehfest mit der inneren Eingangswelle 12 verbinden kann, kann wahlweise auch das Losrad Z1a drehfest mit der inneren Eingangswelle 12 verbunden werden. Weiter kann das Losrad Z1a über die Schalteinheit S2 drehfest mit der Ausgangswelle 13 verbunden werden. Das Losrad Z1a kämmt mit dem Festrad Z1b, das auf der äußeren Vorgelegewelle 16 angeordnet ist. Die dritte Zahnradebene Z1 ist über eine Schaltvorrichtung 17, die zumindest die Schalteinheiten S1 umfasst aber auch die S2 umfassen kann, als ein erstes Gangradpaar zur Bildung von zwei der Vorwärtsgetriebegänge V8, V9 schaltbar. Die dritte Zahnradebene Z1 ist alternativ über die Schalteinheiten S1 als eine dritte Eingangskonstante zur Bildung von zwei weiteren Vorwärtsgetriebegängen V1, V2 schaltbar.

Die vierte Zahnradebene Z2 umfasst das Losrad Z2a, das über die Schalteinheit S2 mit der Ausgangswelle 13 verbindbar ist und das mit dem Festrad E2b kämmt, das auf der äußeren Vorgelegewelle 16 angeordnet ist. Die vierte Zahnradebene Z2 dient als ein zweites Gangradpaar zur Bildung von drei der Vorwärtsgetriebegänge V3, V4, V5.

Die fünfte Zahnradebene Z3 umfasst das auf der Ausgangswelle 13 angeordnete Festrad Z3a und das auf der äußeren Vorgelegewelle 15 angeordnete Losrad Z3b, das über die Schalteinheit S3 mit der äußeren Vorgelegewelle 15 verbunden werden kann. Die Schalteinheit S3 kann weiter die äußere Vorgelegewelle 16 drehfest mit der inneren Vorgelegewelle 15 verbinden. Die fünfte Zahnradebene Z3 dient als drittes Gangradpaar zur Bildung des fünften Vorwärtsgetriebegangs V5.

Die sechste Zahnradebene Z4 umfasst das auf der Ausgangswelle 13 angeordnete Losrad Z4a, das mittels der Schalteinheit S4 mit der Ausgangswelle 13 verbunden werden kann. Das Losrad Z4a kämmt mit dem Festrad Z4b, das auf der inneren Vorgelegewelle 15 angeordnet ist. Die sechste Zahnradebene Z4 dient als viertes Gangradpaar zur Bildung von zwei der Vorwärtsgetriebegänge V1, V2.

Die siebte Zahnradebene Z5 dient zur Bildung der Rückwärtsgetriebegänge R1, R2, R3 und umfasst das Losrad Z5a, das Festrad Z5b und eine Umkehreinheit 19, mittels der eine Drehrichtung der Ausgangswelle 13 bei gleich bleibender Drehrichtung der Antriebswelle 10 bei Schaltung eines der Rückwärtsgetriebegänge R1, R2, R3 umgekehrt wird. Die siebte Zahnradebene Z5 umfasst das auf der Ausgangswelle 13 angeordnete Losrad Z5a, das mittels der Schalteinheit S4 mit der Ausgangswelle 13 verbindbar ist, und das Festrad Z5b, das auf der inneren Vorgelegewelle 15 angeordnet ist. Zur Umkehrung der Drehrichtung kämmen das Losrad Z5a und das Festrad Z5b mit dem dritten in der Zahnradebene Z5 angeordneten Zahnrad, das zu der Umkehreinheit 19 gehört und als ein Festrad 20 auf einer drehbar angeordneten Rücklaufwelle 21 ausgebildet ist.

Zur Bildung des Vorwärtsgetriebegangs V7, der als ein Direktgang ausgelegt ist, wird das Losrad Z1a über die Schalteinheit S1 mit der inneren Eingangswelle 11 und über die Schalteinheit S2 mit der Ausgangswelle 13 drehfest verbunden.

Das Zahnräderwechselgetriebe umfasst somit genau sieben Zahnradebenen E1, E2, Z1-Z5 und genau vier Schalteinheiten S1-S4. Durch die Zahnradebenen E1, E2, Z1-Z5 und die Schalteinheiten S1-S4 sind neun durchgehend sequentiell lastschaltbare Vorwärtsgetriebegänge V1-V9 sowie drei durchgehend sequentiell lastschaltbare Rückwärtsgetriebegänge R1-R3 bildbar.

Eine prinzipielle Eigenschaft des Zahnräderwechselgetriebes ist, dass ein Stufensprung ϕ_{1/2} zwischen dem ersten und zweiten Vorwärtsgetriebegang V1, V2 identisch ist mit einem Stufensprung ϕ_{3/4} zwischen dem dritten und dem vierten Getriebegang V3, V4 und einem Stufensprung ϕ_{7/8} zwischen dem siebten und achten Vorwärtsgetriebegang V7, V8. Weiter ist prinzipbedingt ein Stufensprung ϕ_{4/5} zwischen dem vierten und dem fünften Vorwärtsgetriebegang V5 gleich wie ein Stufensprung ϕ_{8/9} zwischen dem achten und neunten Vorwärtsgetriebegang V8, V9. Alle übrigen Stufensprünge ϕ_{2/3}, ϕ_{5/6}, ϕ_{6/7} sind ohne Einschränkung frei wählbar.

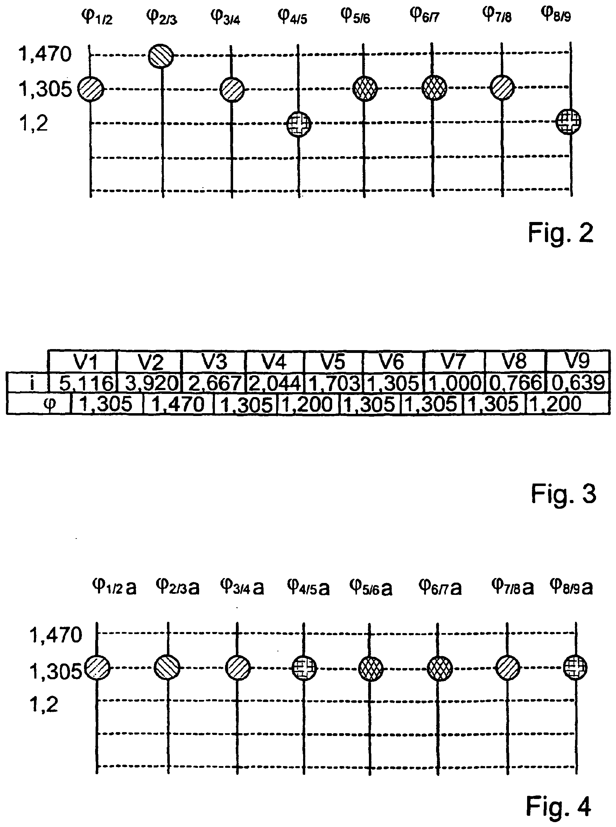

Eine grundsätzlich mögliche Abstufung ϕ unter Berücksichtung der prinzipiell gleich gro-βen Stufensprünge ist eine Abstufung ϕ, bei der sämtliche Stufensprünge ϕ_{1/2}, ϕ_{3/4}, ϕ_{4/5}, ϕ_{5/6}, ϕ_{6/7}, ϕ_{7/8}, ϕ_{8/9} dem Betrag nach kleiner sind als der Stufensprung ϕ_{2/3} zwischen dem zweiten und dritten Vorwärtsgetriebegang V2, V3, wie sie in Figur 2 gezeigt sind.

In dem erfindungsgemäßen Zahnräderwechselgetriebe sind zusätzlich sämtliche ϕ_{1/2}, ϕ_{3/4}, ϕ_{3/4}, ϕ_{5/6}, ϕ_{6/7}, ϕ_{7/8} Stufensprünge größer als der Stufensprung ϕ_{8/9} zwischen den beiden höchsten Vorwärtsgetriebegängen V8, V9 und dem prinzipbedingt gleich großen Stufensprung ϕ_{4/5} zwischen dem vierten und dem fünften Vorwärtsgetriebegang V4, V5 ausgestaltet. Die an sich frei wählbaren Stufensprünge ϕ_{5/6} und ϕ_{6/7} sind dabei gleich groß wie die Stufensprünge ϕ_{1/2}, ϕ_{3/4} und ϕ_{7/8} gewählt, grundsätzlich ist aber auch eine andere Wahl der Stufensprünge ϕ_{5/6} und ϕ_{6/7} möglich. Eine beispielhafte Übersetzungsreihe mit dieser Abstufung ϕ ist in Figur 3 gegeben. Außerdem ist in Figur 3 eine mögliche Getriebeübersetzung i der einzelnen Vorwärtsgetriebegänge V1-V9 angegeben.

In Figur 4 ist eine alternativ mögliche Abstufung des Zahnräderwechselgetriebes gezeigt, bei der alle Stufensprünge ϕ_{1/2}a-ϕ_{8/9}a annähernd gleich bleibend ausgebildet sind.

Zur Bildung des ersten Vorwärtsgetriebegangs V1 wird die innere Eingangswelle 11 über die Schalteinheit S1 und die Zahnradebene Z1, die als Eingangskonstante dient, mit der äußeren Vorgelegewelle 16 verbunden. Die äußere Vorgelegewelle 16 wird über die Schalteinheit S3 mit der inneren Vorgelegewelle 15 verbunden. Außerdem wird die innere Vorgelegewelle 15 über die Zahnradebene Z3 und die Schalteinheit S3 mit der Ausgangswelle 13 verbunden und der erste Vorwärtsgetriebegang V1 ist gebildet.

Prinzipbedingt ist dann der zweite Vorwärtsgetriebegang V2 bereits gebildet, da die äußere Eingangswelle 11 über die Zahnradebene E1 mit der inneren Vorgelegewelle 15 verbunden ist, die durch die Bildung des ersten Vorwärtsgetriebegangs V1 bereits mit der Ausgangswelle 13 verbunden ist.

In einer primären Anfahrphase eines Anfahrmodus werden der erste und der zweite Vorwärtsgetriebegang V1, V2 eingelegt und die zugehörigen Lastschaltkupplungen K2, K1 werden schlupfend betrieben, wodurch beide Vorwärtsgetriebegänge V1, V2 an der Übertragung des Antriebsdrehmoments 14 beteiligt sind. Das Anfahren erfolgt also in einer primären Phase gleichzeitig über die Vorwärtsgetriebegänge V1 und V2. Ein solcher Anfahrmodus über beide Lastschaltkupplungen K2, K1 ist insbesondere vorteilhaft einsetzbar, da der Stufensprung ϕ_{1/2} zwischen dem ersten Vorwärtsgetriebegang V1 und dem zweiten Vorwärtsgetriebegang V2 vergleichsweise klein ist, also beispielsweise kleiner als der Stufensprung ϕ_{2/3} zwischen den Vorwärtsgetriebegängen V2 und V3, da in einem solchen Fall die realisierbaren Differenzdrehzahlen in den schlupfend betriebenen Lastschaltkupplungen K2 und K1 vergleichsweise gering sind und somit in den Lastschaltkupplungen K2 und K1 übermäßiger Verschleiß und/oder übermäßiger Wärmeeintrag durch besonders hohe Reibleistungen weitgehend vermieden werden können.

Abhängig von einer oder mehreren Kenngrößen, wie beispielsweise einem Beladungszustand des Fahrzeugs, einer Steigung oder einem Gefälle der Fahrbahn sowie einer Antriebsdrehmomentvorgabe durch den Fahrer über die Stellung des Fahrpedals, wird nach der zuvor beschriebenen primären Anfahrphase über die zwei Vorwärtsgetriebegänge V1 und V2 durch eine Steuereinheit 22 festgelegt, welche der beiden Lastschaltkupplungen K1, K2 im Anschluss an die primäre Anfahrphase sukzessive geöffnet und welche der beiden Lastschaltkupplungen K2, K1 im Anschluss an die primäre Anfahrphase sukzessive geschlossen wird, so dass nur noch eine der Lastschaltkupplungen K1, K2 und somit nur noch einer der Vorwärtsgetriebegänge V2, V1 an der Übertragung des Antriebsdrehmoments 14 beteiligt ist. Hierzu wird entweder die Lastschaltkupplung K1 bei gleichzeitiger sukzessiver Öffnung der Lastschaltkupplung K2 sukzessive geschlossen oder die Lastschaltkupplung K2 bei gleichzeitiger sukzessiver Öffnung der Lastschaltkupplung K1 sukzessive geschlossen.

Alternativ gibt es Anfahrmodi, bei denen in einer primären Anfahrphase je nach Anfahrmodus ein erster oder ein zweiter Vorwärtsgetriebegang V1, V2 geschaltet wird, indem die zugehörige Lastschaltkupplung K1, K2 schlupfend betrieben wird, während die andere Lastschaltkupplung K2, K1 geöffnet ist. Eine Entscheidung, welcher Anfahrmodus gewählt wird, hängt dabei insbesondere von einem Fahrerwunsch und/oder von einem oder mehreren anderen der Steuereinheit zugänglichen und dem Fachmann als sinnvoll erscheinenden Betriebsparametem ab.

Da der erste Stufensprung ϕ_{1/2} kleiner ist als der zweite Stufensprung ϕ_{2/3}, eignet sich ein Anfahrmodus mit dem ersten Vorwärtsgetriebegang V1 insbesondere als ein Anfahrgang in einem Stop-and-Go-Betriebsmodus oder in einem Betriebsmodus, in dem ein besonders feinfühliges Rangieren erforderlich ist. Auch bei einem Betriebsmodus mit hoher Beladung und/oder an einer Steigung ist der Anfahrmodus im ersten Vorwärtsgetriebegang V1 vorteilhaft. Ist ein Betriebsmodus gegeben, in dem ein Anfahrmodus im zweiten Getriebegang ausreichend ist, wird dieser gewählt.

Grundsätzlich ist auch ein Anfahrmodus, bei dem unabhängig von Betriebsparametern im ersten Vorwärtsgetriebegang angefahren wird, denkbar.

Um unter Last vom ersten Vorwärtsgetriebegang V1 in den zweiten Vorwärtsgetriebegang V2 zu schalten, wenn der erste Vorwärtsgetriebegang V1 geschaltet ist, wird durch die Steuereinheit 22 von der zweiten Lastschaltkupplung K2 auf die erste Lastschaltkupplung K1 geschaltet, indem die Lastschaltkupplung K1 bei gleichzeitiger sukzessiver Öffnung der Lastschaltkupplung K2 sukzessive geschlossen wird. Die Schalteinheiten S1 und S2 können anschließend lastfrei ausgekuppelt werden.

Um den dritten Vorwärtsgetriebegang V3 zu bilden, wird das Losrad Z1 a über die Schalteinheit S1 drehfest mit der inneren Eingangswelle 11 verbunden, wodurch die innere Eingangswelle 11 wirkungsmäßig mit der äußeren Vorgelegewelle 16 verbunden ist. Außerdem wird über die Zahnradebene Z2 und die Schalteinheit S2 die äußere Vorgelegewelle 16 mit der Ausgangswelle 13 verbunden, und der dritte Vorwärtsgetriebegang V3 ist gebildet.

Um unter Last vom zweiten Vorwärtsgetriebegang V2 in den dritten Vorwärtsgetriebegang V3 zu schalten, wird durch die Steuereinheit 22 von der ersten Lastschaltkupplung K1 auf die zweite Lastschaltkupplung K2 geschaltet, indem die Lastschaltkupplung K2 bei gleichzeitiger sukzessiver Öffnung der Lastschaltkupplung K1 sukzessive geschlossen wird. Die Schalteinheit S4 kann anschließend lastfrei ausgekuppelt werden.

Zur Bildung des vierten Vorwärtsgetriebegangs V4 wird über die Schalteinheit S3 die innere Vorgelegewelle 15, die über die Zahnradebene E1 mit der äußeren Eingangswelle 12 verbunden ist, mit der äußeren Vorgelegewelle 16 verbunden. Durch die Schaltung des dritten Vorwärtsgetriebegangs V3 ist das Losrad Z2a der zweiten Zahnradebene Z2 über die Schalteinheit S2 mit der Ausgangswelle 13 verbunden und die äußere Vorgelegewelle 16 ist über die Zahnradebene Z2 mit der Ausgangswelle 13 verbunden. Der vierte Vorwärtsgetriebegang V4 ist gebildet.

Um unter Last vom dritten Vorwärtsgetriebegang V3 in den vierten Vorwärtsgetriebegang V4 zu schalten, wird durch die Steuereinheit 22 von der zweiten Lastschaltkupplung K2 auf die erste Lastschaltkupplung K1 geschaltet, indem die Lastschaltkupplung K1 bei gleichzeitiger sukzessiver Öffnung der Lastschaltkupplung K2 sukzessive geschlossen wird. Die Schalteinheit S1 kann anschließend lastfrei ausgekuppelt werden.

Um den fünften Vorwärtsgetriebegang V5 zu bilden, wird die innere Eingangswelle 11 über die Schalteinheit S1 und die Zahnradebene E2 mit der äußeren Vorgelegewelle 16 verbunden. Durch die Schaltung des vierten Vorwärtsgetriebegangs V4 ist bereits die äu-βere Vorgelegewelle 16 über die zweite Zahnradebene Z2 und die Schalteinheit S2 mit der Ausgangswelle 13 verbunden, und der fünfte Getriebegang V5 ist gebildet.

Um unter Last vom vierten Vorwärtsgetriebegang V4 in den fünften Vorwärtsgetriebegang V5 zu schalten, wird durch die Steuereinheit 22 von der ersten Lastschaltkupplung K1 auf die zweite Lastschaltkupplung K2 geschaltet, indem die Lastschaltkupplung K2 bei gleichzeitiger sukzessiver Öffnung der Lastschaltkupplung K1 sukzessive geschlossen wird. Die Schalteinheit S3 kann anschließend lastfrei ausgekuppelt werden.

Der sechste Vorwärtsgetriebegang V6 wird gebildet, indem die innere Vorgelegewelle 15, die über die Zahnradebene E2 mit der äußeren Eingangswelle 12 verbunden ist, über die Zahnradebene Z3 und die Schalteinheit S3 mit der Ausgangswelle 13 verbunden wird. Um unter Last vom fünften Vorwärtsgetriebegang V5 in den sechsten Vorwärtsgetriebegang V6 zu schalten, wird durch die Steuereinheit 22 von der zweiten Lastschaltkupplung K2 auf die erste Lastschaltkupplung K1 geschaltet, indem die Lastschaltkupplung K1 bei gleichzeitiger sukzessiver Öffnung der Lastschaltkupplung K2 sukzessive geschlossen wird. Die Schalteinheiten S1 und S2 können anschließend lastfrei ausgekuppelt werden.

Um den siebten Vorwärtsgetriebegang V7 zu bilden, wird die innere Eingangswelle 11 über die Schalteinheit S1 drehfest mit dem Losrad Z1a der dritten Zahnradebene Z1 verbunden. Das Losrad Z1 a wiederum wird über die Schalteinheit S2 mit der Ausgangswelle 13 verbunden, und der siebte Vorwärtsgetriebegang V7, der als ein Direktgetriebegang mit einer drehfesten Verbindung zwischen der inneren Eingangswelle 11 und der Ausgangswelle 13 ausgelegt ist, ist gebildet.

Um unter Last vom sechsten Vorwärtsgetriebegang V6 in den siebten Vorwärtsgetriebegang V7 zu schalten, wird durch die Steuereinheit 22 von der ersten Lastschaltkupplung K1 auf die zweite Lastschaltkupplung K2 geschaltet, indem die Lastschaltkupplung K2 bei gleichzeitiger sukzessiver Öffnung der Lastschaltkupplung K1 sukzessive geschlossen wird. Die Schalteinheit S3 kann anschließend lastfrei ausgekuppelt werden.

Zur Bildung des achten Vorwärtsgetriebegangs V8 wird die innere Vorgelegewelle 15 über die Schalteinheit S3 mit der äußeren Vorgelegewelle 16 verbunden. Durch die Schaltung des siebten Vorwärtsgetriebegangs V7 ist das Losrad Z1a über die Schalteinheit S2 mit der Ausgangswelle 13 verbunden, wodurch die äußere Vorgelegewelle 16 mit der Ausgangswelle 13 verbunden ist und der achte Vorwärtsgetriebegang V8 geschaltet ist. Um unter Last vom siebten Vorwärtsgetriebegang V7 in den achten Vorwärtsgetriebegang V8 zu schalten, wird durch die Steuereinheit 22 von der zweiten Lastschaltkupplung K2 auf die erste Lastschaltkupplung K1 geschaltet, indem die Lastschaltkupplung K1 bei gleichzeitiger sukzessiver Öffnung der Lastschaltkupplung K2 sukzessive geschlossen wird. Die Schalteinheit S1 kann anschließend lastfrei ausgekuppelt werden.

Um den neunten Vorwärtsgetriebegang V9 zu bilden, wird die innere Eingangswelle 11 über die Schalteinheit S1 und die Zahnradebene E2 mit der äußeren Vorgelegewelle 16 verbunden. Durch die Schaltung des achten Vorwärtsgetriebegangs V8 ist die äußere Vorgelegewelle 16 über die Zahnradebene Z1 und die Schalteinheit S2 bereits mit der Ausgangswelle 13 verbunden und der neunte Vorwärtsgetriebegang V9 ist gebildet.

Um unter Last vom achten Vorwärtsgetriebegang V8 in den neunten Vorwärtsgetriebegang V9 zu schalten, wird durch die Steuereinheit 22 von der ersten Lastschaltkupplung K1 auf die zweite Lastschaltkupplung K2 geschaltet, indem die Lastschaltkupplung K2 bei gleichzeitiger sukzessiver Öffnung der Lastschaltkupplung K1 sukzessive geschlossen wird. Die Schalteinheit S3 kann anschließend lastfrei ausgekuppelt werden.

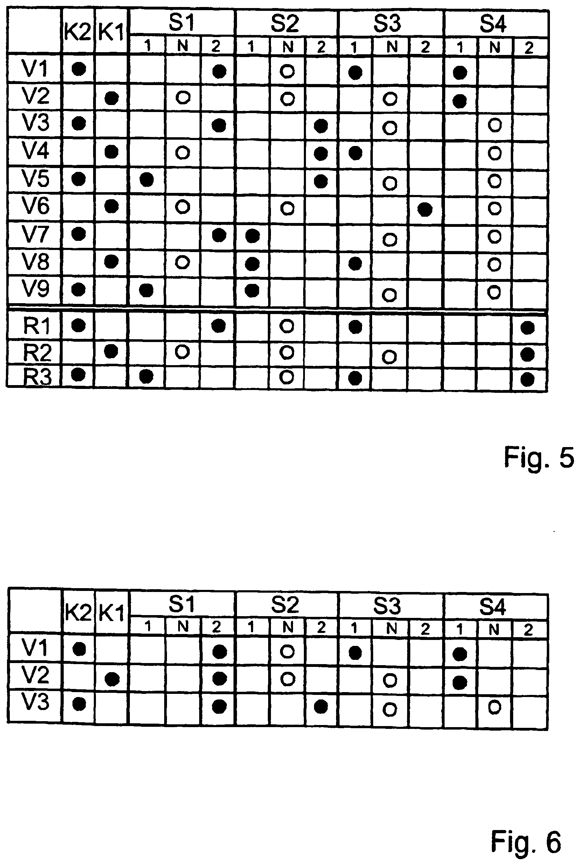

Neben den sequentiellen Schaltvorgängen von einem Vorwärtsgetriebegang in einen benachbarten Vorwärtsgetriebegang sind bei einer solchen Schaltlogik, wie sie in Figur 5 gezeigt ist, auch Dreifachschaltvorgänge unter Last möglich. Nach dem beschriebenen Schaltschema sind insbesondere Dreifachschaltvorgänge von dem zweiten in den fünften Vorwärtsgetriebegang V2, V5, von dem dritten in den sechsten Vorwärtsgetriebegang V3, V6 und von dem sechsten in den neunten Vorwärtsgetriebegang V6, V9 möglich, da bei diesen Schaltvorgängen die entsprechenden Schalteinheiten S1, S2, S3 lastfrei gekuppelt werden können und anschließend unter Last von der einen Lastschaltkupplung K2, K1 auf die andere Lastschaltkupplung K1, K2 geschaltet werden kann, indem die eine Lastschaltkupplung K2, K1 bei gleichzeitiger sukzessiver Öffnung der anderen Lastschaltkupplung K1, K2 sukzessive geschlossen wird.

Die Steuereinheit 22 passt in bestimmten Betriebsmodi die Schaltlogik in Abhängigkeit von dem nächsten zu erwartenden Schaltvorgang an. Schaltelementbetätigungen von einem gekoppelten Zustand 2 in eine Neutralstellung N und beim nächsten Schaltvorgang zurück in den gekoppelten Zustand 2 werden vermieden und somit wird eine Anzahl von Schaltelementbetätigungen reduziert, indem Schaltelementbetätigungen, die lediglich zu einer rotatorischen Entkopplung führen, unterlassen werden.

Figur 6 zeigt eine angepasste Schaltlogik für einen Beschleunigungsmodus, bei dem vom ersten Vorwärtsgetriebegang V1 in den zweiten Vorwärtsgetriebegang V2 und direkt anschließend in den dritten Vorwärtsgetriebegang V3 geschaltet wird. Nach der Schaltung des zweiten Vorwärtsgetriebegangs V2 wird darauf verzichtet, die Schalteinheit S2 auszukuppeln, da diese für die Bildung des dritten Vorwärtsgetriebegangs V4 wieder gleich gekuppelt sein muss wie für die Bildung des ersten Vorwärtsgetriebegangs V1. Für eine Rückschaltung vom dritten Vorwärtsgetriebegang V3 über den zweiten Vorwärtsgetriebegang V2 in den ersten Vorwärtsgetriebegang V1 wird die gleiche Schaltlogik verwendet. Ist zu erwarten, dass der zweite Vorwärtsgetriebegang V2 längere Zeit gekuppelt bleibt, werden durch ein Auskuppeln der Schalteinheit S2 nach dem Schalten des zweiten Vorwärtsgetriebegangs V2 Verluste, wie beispielsweise Schleppverluste oder Ventilationsverluste, durch eine vorliegende Zwangsrelativbewegung der zweiten Lastschaltkupplung K2 minimiert.

Analog können durch eine angepasste Schaltlogik auch Schaltelementbetätigungen der restliche Schalteinheiten S2, S3, S4 minimiert werden, indem bei Erwartung entsprechender Schaltvorgänge, beispielsweise in einem weiteren Beschleunigungsmodus oder bei einem Dreifachschaltvorgang, eine angepasste Schaltlogik angewendet wird.

Die Rückwärtsgetriebegänge R1, R2, R3 werden unter Verwendung der Zahnradebene Z5, die die Umkehreinheit 19 zur Umkehrung der Drehrichtung umfasst, gebildet. Zur Bildung des ersten Rückwärtsgetriebegangs R1 wird die innere Eingangswelle 11 über die Schalteinheit S1 und die Zahnradebene Z1 mit der äußeren Vorgelegewelle 16 verbunden. Außerdem wird die äußere Vorgelegewelle 16 über die Schalteinheit S3 mit der inneren Vorgelegewelle 15 verbunden, die über die Zahnradebene Z5 und die Schalteinheit S4 mit der Ausgangswelle 13 verbunden wird. Der erste Rückwärtsgetriebegang R1 ist gebildet.

Der erste Rückwärtsgetriebegang R1 wird geschaltet, indem die Lastschaltkupplung K2 sukzessive geschlossen wird. Prinzipbedingt ist mit dem ersten Rückwärtsgetriebegang R1 auch der zweite Rückwärtsgetriebegang R2 gebildet, da die äußere Eingangswelle 12 über die erste Zahnradebene E1 mit der inneren Vorgelegewelle 15 verbunden ist, die wiederum über die Zahnradebene Z5 und die Schalteinheit S4 durch die Schaltung des ersten Rückwärtsgetriebegangs R1 mit der Ausgangswelle 13 verbunden ist. Somit kann prinzipiell auch gleichzeitig über den ersten und den zweiten Rückwärtsgetriebegang R1, R2 angefahren werden, indem die zugehörigen Lastschaltkupplungen K1, K2 sukzessive geschlossen werden.

Um unter Last vom ersten Rückwärtsgetriebegang R1 in den zweiten Rückwärtsgetriebegang R2 zu schalten, wird durch die Steuereinheit 22 von der zweiten Lastschaltkupplung K2 auf die erste Lastschaltkupplung K1 geschaltet, indem die Lastschaltkupplung K1 bei gleichzeitiger sukzessiver Öffnung der Lastschaltkupplung K2 sukzessive geschlossen wird. Die Schalteinheiten S1 und S3 können anschließend lastfrei ausgekuppelt werden.

Um den dritten Rückwärtsgetriebegang R3 zu bilden, wird die innere Eingangswelle 11 über die Schalteinheit S1 und die Zahnradebene E2 mit der äußeren Vorgelegewelle 16 verbunden. Außerdem wird die äußere Vorgelegewelle 16 über die Schalteinheit S3 mit der inneren Vorgelegewelle 15 verbunden, die bereits durch die Schaltung des zweiten Rückwärtsgetriebegangs R2 über die Zahnradebene Z5 und die Schalteinheit S4 mit der Ausgangswelle 13 verbunden ist.

Um unter Last vom zweiten Rückwärtsgetriebegang R2 in den dritten Rückwärtsgetriebegang R3 zu schalten, wird durch die Steuereinheit 22 von der ersten Lastschaltkupplung K1 auf die zweite Lastschaltkupplung K2 geschaltet, indem die Lastschaltkupplung K2 bei gleichzeitiger sukzessiver Öffnung der Lastschaltkupplung K1 sukzessive geschlossen wird.

Auch bei den Rückwärtsgetriebegängen R1-R3 kann eine Anzahl von Schaltelementbetätigungen durch die Vermeidung von Schaltelementbetätigungen, die lediglich zu einer rotatorischen Entkopplung von Zahnrädern führen, reduziert werden. Insbesondere kann auf ein Auskuppeln der Schalteinheit S3 im zweiten Rückwärtsgetriebegang R2 verzichtet werden.

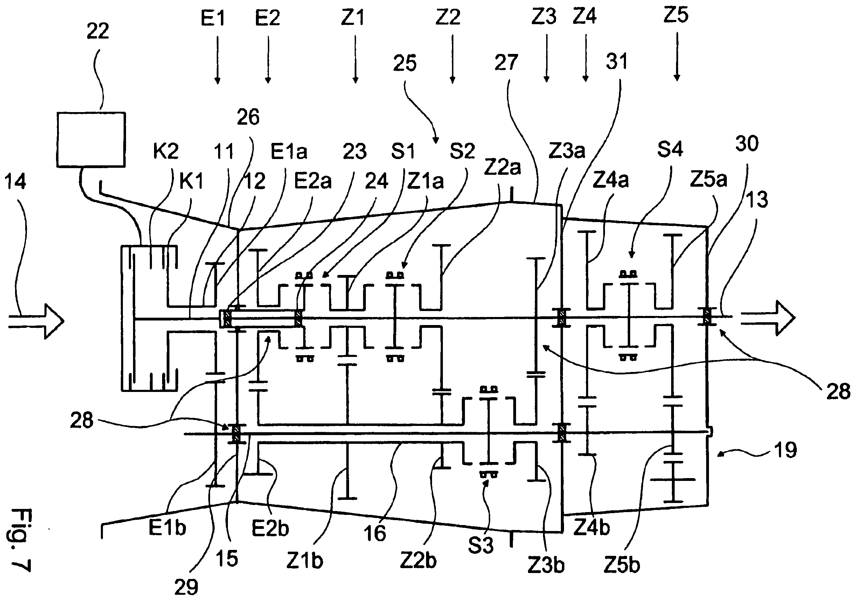

Figur 7 zeigt ein Lagerungskonzept des erfindungsgemäßen Zahnräderwechselgetriebes. Zur Lagerung der Eingangswellen 11, 12 und der Ausgangswelle 13 sowie der Vorgelegewellen 15, 16 ist eine Lagerungseinheit 28 angeordnet, die drei Lagerebenen 29, 30, 31 umfasst. Zur Vereinfachung ist eine Lagerung der Rücklaufwelle 21 nicht näher dargestellt.

Die Ausgangswelle 13 ist gegen die innere Eingangswelle 11 mittels eines Pilotlagers 23 gelagert, das als ein Wälzlager ausgeführt ist. Das Pilotlager 23 ist axial auf Höhe der ersten Zahnradebene E1 angeordnet, die eingangsseitig der zweiten Zahnradebene E2 liegt. Auf axialer Höhe der Schalteinheit S1 ist ein Zusatzlager 24 angeordnet, das ebenfalls die innere Eingangswelle 11 gegen die Ausgangswelle 13 lagert. Ein der Ausgangswelle 13 zugewandtes Ende der inneren Eingangswelle 11 ist dazu bis auf eine axiale Höhe der ersten Zahnradebene E1, wo das Pilotlager 23 angeordnet ist, als eine Hohlwelle ausgeführt. Die Ausgangswelle 13, die koaxial zu den Eingangswellen 11, 12 angeordnet ist, durchsetzt das als Hohlwelle ausgeführte Ende der inneren Eingangswelle 11 und ist durch das Pilotlager 23 und das Zusatzlager 24 drehbar an der inneren Eingangswelle 11 gelagert.

Die Eingangswellen 11, 12, die Vorgelegewellen 15, 16 und die Ausgangswelle 13 sind innerhalb eines Getriebegehäuses 25, das aus zwei Getriebegehäuseteilen 26, 27 besteht, mittels drei Lagerebenen 29, 30, 31 gelagert. Eine erste Lagerebene 29 ist axial zwischen der ersten und der zweiten Zahnradebene E1, E2 angeordnet. Das Festrad E1 b ist daher fliegend gelagert. Alternativ ist auch eine Anordnung der ersten Lagerebene 29 zwischen den Schaltkupplungsvorrichtungen K1, K2 und der ersten Zahnradebene E1 denkbar. Die erste Lagerebene 29 ist einteilig mit dem eingangsseitigen Getriebegehäuseteil ausgeführt und schließt das Getriebegehäuse 25 eingangsseitig ab. Eine zweite Lagerebene 30 ist einteilig mit dem ausgangsseitigen Getriebegehäuseteil 27 ausgeführt und schließt das Getriebegehäuse 25 ausgangsseitig ab. Die zweite Lagerebene 30 ist ausgangsseitig von der siebten Zahnradebene Z5 angeordnet.

Eine dritte Lagerebene 31, die als eine Lagerwand ausgeführt ist, ist zwischen der fünften und der sechsten Zahnradebene Z3, Z4 angeordnet. Die als Lagerwand ausgeführte Lagerebene 31 ist fest mit dem ausgangsseitigen Getriebegehäuseteil 27 des Getriebegehäuses 25 verbunden.

## Patentansprüche

1. Zahnräderwechselgetriebe mit zumindest zwei Eingangswellen (11, 12), die über zumindest zwei Lastschaltkupplungen (K1, K2) mit einer Antriebswelle (10) verbindbar sind, mit in Zahnradebenen (E1, E2, Z1-Z5) angeordneten Zahnrädern und mit einer Ausgangswelle (13), die wirkungsmäßig mit den Eingangswellen (11, 12) verbindbar ist, sowie mit zumindest zwei sequentiell schaltbaren Vorwärtsgetriebegängen (V1-V9) und einer Schaltvorrichtung (17), die dazu vorgesehen ist, entweder eine der Zahnradebenen (Z1) als eine Eingangskonstante zur Bildung zumindest eines Getriebegangs (V1, V3) oder als ein Gangradpaar zur Bildung eines weiteren Getriebegangs (V8, V9) zu schalten, wobei die Schaltvorrichtung (17) eine Schalteinheit (S1) umfasst, die dazu vorgesehen ist, eine der Eingangswellen (11) wahlweise drehfest mit einem von zwei Losrädern (E2a, Z1a) zu verbinden,
**dadurch gekennzeichnet, dass**
die Schaltvorrichtung (17) eine weitere Schalteinheit (S2) umfasst, die dazu vorgesehen ist, eines der beiden Losräder (Z1a) drehfest mit der Ausgangswelle (13) zu verbinden.

2. Zahnräderwechselgetriebe nach Anspruch 1,
**dadurch gekennzeichnet, dass**
eines der Losräder (E2a) gegenüber einer der Eingangswellen (11) gleitgelagert ist.

3. Zahnräderwechselgetriebe nach einem der vorhergehenden Ansprüche,
**dadurch gekennzeichnet, dass**
die Zahnradebene (Z1) als Eingangskonstante zur Bildung von zwei Vorwärtsgetriebegängen (V1, V2) und als Gangradpaar zur Bildung von zwei der Vorwärtsgetriebegänge (V8, V9) vorgesehen ist.

4. Zahnräderwechselgetriebe nach einem der vorhergehenden Ansprüche,
**dadurch gekennzeichnet, dass**
eine weitere Zahnradebene (Z2) als ein Gangradpaar zur Bildung von drei weiteren der Vorwärtsgetriebegänge (V3, V4, V5) vorgesehen ist.

5. Zahnräderwechselgetriebe nach einem der vorhergehenden Ansprüche,
**dadurch gekennzeichnet, dass**
zur Bildung eines Vorwärtsgetriebegangs (V7), der als ein Direktgang ausgelegt ist, ein Losrad (Z1a) der ersten Zahnradebene (Z1) mit einer der Eingangswellen (11) und mit der Ausgangswelle (13) drehfest verbindbar ist.

6. Zahnräderwechselgetriebe nach einem der vorhergehenden Ansprüche,
**dadurch gekennzeichnet, dass**
zumindest zwei Stufensprünge (ϕ_{1/2}, ϕ_{2/3}) unterschiedlich groß ausgebildet sind.

7. Zahnräderwechselgetriebe nach Anspruch 6,
**dadurch gekennzeichnet, dass**
sämtliche Stufensprünge (ϕ_{1/2}, ϕ_{3/4}, ϕ_{4/5}, ϕ_{5/6}, ϕ_{6/7}, ϕ_{7/8}, ϕ_{8/9}) dem Betrag nach kleiner sind als ein Stufensprung (ϕ_{2/3}) zwischen dem zweiten und dem dritten Vorwärtsgetriebegang (V2, V3).

8. Zahnräderwechselgetriebe nach einem der Ansprüche 1 bis 5,
**dadurch gekennzeichnet, dass**
sämtliche Stufensprünge (ϕ_{1/2}-ϕ_{8/9}) zwischen je zwei benachbarten Vorwärtsgetriebegängen (V1-V9) annähernd gleich bleibend ausgebildet sind.

9. Zahnräderwechselgetriebe nach einem der vorhergehenden Ansprüche,
**dadurch gekennzeichnet, dass**
ein Ende einer der Eingangswellen (11), das dazu vorgesehen ist, ein Pilotlager (23) aufzunehmen, und/oder das der Ausgangswelle (13) zugewandt ist, als eine Hohlwelle ausgeführt ist.

10. Zahnräderwechselgetriebe nach Anspruch 9,
**dadurch gekennzeichnet,**
**dass** das Pilotlager (23) eingangsseitig der zweiten Zahnradebene (E2) angeordnet ist.

11. Zahnräderwechselgetriebe nach einem der vorhergehenden Ansprüche,
**dadurch gekennzeichnet, dass**
die Vorgelegewelle (16) als Hohlwelle ausgebildet ist, auf der ausschließlich Festräder angeordnet sind.

## Claims

1. Variable-speed gearbox comprising at least two input shafts (11, 12) which can be connected to a drive shaft (10) via at least two powershift clutches (K1, K2), further comprising gears arranged in gear planes (E1, E2, Z1-Z5) and an output shaft (13) which can be actively connected to the input shafts (11, 12), and further comprising at least two sequentially selectable forward gears (V1-V9) and a shifting device (17) which is provided for either shifting one of the gear planes (Z1) as an input constant for the formation of at least one gear (V1, V3) or as a gear pair for the formation of a further gear (V8, V9), wherein the shifting device (17) comprises a shifting unit (S1) which is provided for optionally connecting one of the input shafts (11) non-rotatably to one of two idler gears (E2a, Z1a),
**characterised in that**
the shifting device (17) comprises a further shifting unit (S2) which is provided for connecting one of the two idler gears (Z1a) non-rotatably to the output shaft (13).

2. Variable-speed gearbox according to claim 1,
**characterised in that**
one of the idler gears (E2a) is supported in plain bearings with respect to one of the input shafts (11).

3. Variable-speed gearbox according to any of the preceding claims,
**characterised in that**
the gear plane (Z1) is provided as an input constant for the formation of two forward gears (V1, V2) and as a gear pair for the formation of two of the forward gears (V8, V9).

4. Variable-speed gearbox according to any of the preceding claims,
**characterised in that**
a further gear plane (Z2) is provided as a gear pair for the formation of three further forward gears (V3, V4, V5).

5. Variable-speed gearbox according to any of the preceding claims,
**characterised in that**
for the formation of a forward gear (V7) designed as direct drive, an idler gear (Z1a) of the first gear plane (Z1) can be non-rotatably connected to one of the input shafts (11) and to the output shaft (13).

6. Variable-speed gearbox according to any of the preceding claims,
**characterised in that**
at least two step jumps (ϕ_{1/2}, ϕ_{2/3}) are different in size.

7. Variable-speed gearbox according to claim 6,
**characterised in that**
all step jumps (ϕ_{1/2}, ϕ_{3/4}, ϕ_{4/5}, ϕ_{5/6}, ϕ_{6/7}, ϕ_{7/8}, ϕ_{8/9}) are smaller than a step jump (ϕ_{2/3}) between the second and third forward gears (V2, V3).

8. Variable-speed gearbox according to any of claims 1 to 5,
**characterised in that**
all step jumps (ϕ_{1/2}-ϕ_{8/9}) between two adjacent forward gears (V1-V9) are designed to remain approximately constant.

9. Variable-speed gearbox according to any of the preceding claims,
**characterised in that**
one end of one of the input shafts (11), which is provided to accommodate a pilot bearing (23) and/or which faces the output shaft (13), is designed as a hollow shaft.

10. Variable-speed gearbox according to claim 9,
**characterised in that**
the pilot bearing (23) is located on the input side of the second gear plane (E2).

11. Variable-speed gearbox according to any of the preceding claims,
**characterised in that**
the layshaft (16) is designed as a hollow shaft on which only fixed gears are mounted.

## Revendications

1. Boîte de vitesses à engrenages comprenant au moins deux arbres d'entrée (11, 12) qui peuvent être reliés par l'intermédiaire d'au moins deux embrayages sous charge (K1, K2) à un arbre d'entraînement (10), comprenant des engrenages disposés dans des niveaux d'engrenage (E1, E2, Z1-Z5) et un arbre de sortie (13) qui peut être relié fonctionnellement aux arbres d'entrée (11, 12), ainsi qu'au moins deux rapports avant (V1-V9) commutables séquentiellement et un dispositif de commutation (17) qui est destiné à soit commuter l'un des niveaux d'engrenage (V1, V3) en tant que constante d'entrée pour former au moins un rapport (V1, V3) soit en tant que paire de rapports pour former un autre rapport (V8, V9), le dispositif de commutation (17) comprenant une unité de commutation (S1) qui est destinée à relier en rotation l'un des arbres d'entrée (11) sélectivement à l'un des deux pignons fous (E2a, Z1a), **caractérisée en ce que** le dispositif de commutation (17) comprend une autre unité de commutation (S2) qui est destinée à relier en rotation l'un des deux pignons fous (Z1a) à l'arbre de sortie (13).

2. Boîte de vitesses à engrenages selon la revendication 1, **caractérisée en ce que** l'un des pignons fous (E2a) est disposé sur paliers lisses en regard de l'un des arbres d'entrée (11).

3. Boîte de vitesses à engrenages selon l'une quelconque des revendications précédentes, **caractérisée en ce que** le niveau d'engrenage (Z1) est conçu en tant que constante d'entrée destinée à former deux rapports de marche avant (V1, V2) et en tant que paire de rapports destinée à former deux des rapports de marche avant (V8, V9).

4. Boîte de vitesses à engrenages selon l'une quelconque des revendications précédentes, **caractérisée en ce qu'**un autre niveau d'engrenage (Z2) est conçu en tant que paire de rapports destinée à former trois autres rapports de marche avant (V3, V4, V5).

5. Boîte de vitesses à engrenages selon l'une quelconque des revendications précédentes, **caractérisée en ce que** pour la formation d'un rapport de marche avant (V7) qui est conçu en tant que rapport direct, un pignon fou (Z1 a) du premier niveau d'engrenage (Z1) peut être relié en rotation à l'un des arbres d'entrée (11) et à l'arbre de sortie (13).

6. Boîte de vitesses à engrenages selon l'une quelconque des revendications précédentes, **caractérisée en ce qu'**au moins deux étages de transmission (ϕ _{1/2}, ϕ _{2/3}) sont conçus de taille différente.

7. Boîte de vitesses à engrenages selon la revendication 6, **caractérisée en ce que** la somme de l'ensemble des étages de transmission (ϕ _{1/2}, ϕ _{3/4}, ϕ _{4/5}, ϕ _{5/6}, ϕ _{6/7}, ϕ _{7/8}, ϕ _{8/9}) est inférieure à un étage de transmission entre le deuxième et le troisième rapport de marche avant (V2, V3).

8. Boîte de vitesses à engrenages selon l'une quelconque des revendications 1 à 5, **caractérisée en ce que** l'ensemble des étages de transmission (ϕ _{1/2} - ϕ _{8/9}) entre respectivement deux rapports de marche avant adjacents demeure approximativement constante.

9. Boîte de vitesses à engrenages selon l'une quelconque des revendications précédentes, **caractérisée en ce qu'**une extrémité d'un des arbres d'entrée (11) est destinée à loger un palier pilote et/ou qui est orientée vers l'arbre de sortie (13), est conçue comme un arbre creux.

10. Boîte de vitesses à engrenages selon la revendication 9, **caractérisée en ce que** le palier pilote (23) est disposé côté entrée du second niveau d'engrenage (E2).

11. Boîte de vitesses à engrenages selon l'une quelconque des revendications précédentes, **caractérisée en ce que** l'arbre intermédiaire (16) est conçu en tant qu'arbre creux sur lequel sont disposées exclusivement des roues fixes.
